# EUROPÄISCHE PATENTSCHRIFT

(11) **EP 4 767 020 B1**
(45) Veröffentlichungstag und Bekanntmachung des Hinweises auf die Patenterteilung: **14.10.2026**
(21) Anmeldenummer: 25746554.2
(22) Anmeldetag: 14.07.2025
(51) Int. Cl.: G01D 5/245, G01D 5/36

(54) **ENCODER ZUR POSITIONSERFASSUNG**
ENCODER FOR POSITION DETECTION
CODEUR POUR LA DÉTECTION DE POSITION

(30) Priorität: 18.07.2024 DE 102024120443
(43) Veröffentlichungstag der Anmeldung: 01.07.2026
(73) Patentinhaber: iC-Haus GmbH, 55294 Bodenheim (DE)
(72) Erfinder: HERZ, Manfred, 55130 Mainz (DE)
(74) Vertreter: Feder Walter Ebert
(86) Internationale Anmeldenummer: PCT/DE2025/100666
(87) Internationale Veröffentlichungsnummer: WO 2026/017220

(56) Entgegenhaltungen:
- DE-A1- 102006 001 599
- DE-A1- 102015 120 115
- US-A1- 2023 366 702

## Beschreibung

Die Erfindung betrifft einen Encoder zur Positionserfassung, mit einer Maßverkörperung und einer die Maßverkörperung differenziell in einer Tastrichtung abtastenden Sensoranordnung, wobei die Maßverkörperung entlang der Tastrichtung abwechselnd erste Maßsegmente und zweite Maßsegmente aufweist, welche in einem Tastverhältnis stehen, wobei die Maßverkörperung mehrere erste Maßelemente sowie mindestens ein zwischen die ersten Maßelemente eingebettetes zweites Maßelement aufweist.

Solche Encoder, welche auch als Enkoder oder Kodierer bezeichnet werden, kommen in zahlreichen Bereichen der Technik, beispielsweise in der Antriebstechnik, der Robotertechnik oder im Werkzeugmaschinenbau zum Einsatz. Sie dienen insbesondere dazu, Bewegungen und Positionen von Bauteilen oder sonstigen Elementen zu erfassen, um eine präzise Steuerung zu ermöglichen. Bei den Encodern handelt es sich um Gebervorrichtungen oder Messwertgeber, welche eine aktuelle Position oder Bewegung des entsprechenden Bauteils, beispielsweise einer Welle oder eines Antriebsbauteils, erkennen und ein entsprechendes Signal ausgeben können. Je nach Anwendungsfall kann es sich bei den zu erfassenden Bewegungen der Bauteile etwa um Rotationsbewegungen oder Linearbewegungen handeln.

Es sind unterschiedlichste Ausführungsformen von Encodern bekannt, welche sich durch das zugrundeliegende Messprinzip unterscheiden. Je nach Anwendungsfall kommen insbesondere optische, induktive, kapazitive oder magnetische Encoder zum Einsatz. In Abhängigkeit des Messprinzips unterscheidet sich die Ausgestaltung der Maßverkörperung und/oder der Sensoranordnung. Das nachfolgend erläuterte Grundprinzip ist jedoch allen diesen Encodern gemein.

In der Regel sind bei derartigen Encodern eine Maßverkörperung und eine die Maßverkörperung abtastende Sensoranordnung vorgesehen. Die Maßverkörperung, welche häufig an einer Art Codescheibe angeordnet ist, und die oftmals mehrere Einzelsensoren umfassende Sensoranordnung sind in der Regel derart angeordnet, dass bei einer Bewegung des Bauteils eine Relativbewegung zwischen Maßverkörperung und Sensoranordnung entsteht. Hierfür können wahlweise die Maßverkörperung oder die Sensoranordnung an dem beweglichen Bauteil und die jeweils andere Komponente demgegenüber unbeweglich angeordnet sein. Über die Sensoranordnung lassen sich elektrische Signale ausgeben, welche zur Bestimmung der Position bzw. zur Bestimmung von Bewegungen der Maßverkörperung benutzt werden können. Hierüber lassen sich Rückschlüsse auf die Position bzw. Bewegung des korrespondierenden Bauteils ziehen.

Die Abtastung der Maßverkörperung erfolgt in der Praxis verbreitet über Sinus/Cosinus-Geber, die mit zwei Sensoren im gegenseitigen Phasenversatz je ein Sinus- und ein Cosinussignal erzeugen. Durch den Einsatz von die Maßverkörperung in einer Tastrichtung differenziell abtastenden Sensoranordnungen können zusätzliche Informationen, wie etwa differenzielle Signale mit ergänzenden negativen Sinus- und Cosinussignalen, gewonnen werden.

Die Maßverkörperung weist typischerweise entlang der Tastrichtung abwechselnd voneinander unterscheidbare erste und zweite Maßsegmente auf. Die ersten und zweiten Maßsegmente bilden dabei oftmals ein periodisches Muster, welches von der jeweiligen Sensoranordnung abgetastet werden kann. Die bei der Abtastung generierten Signale erlauben die Angabe einer Position der Maßverkörperung. Eine entsprechende Anordnung ist etwa in der DE 10 2014 112 459 A1 beschrieben.

In der Regel stehen die ersten Maßsegmente und die zweiten Maßsegmente in einem Tastverhältnis zueinander. Mit dem Begriff "Tastverhältnis" lässt sich die Verteilung der ersten und zweiten Maßsegmente auf der Maßverkörperung angeben. Oftmals wird das Tastverhältnis durch den Anteil der ersten Maßsegmente an einem die Maßsegmente aufweisenden relevanten Bereich ausgedrückt. Sind die ersten und zweiten Maßsegmente gleich groß, liegt ein Tastverhältnis von 50% vor. Alternativ kann das Tastverhältnis als Verhältnis von Prozentzahlen angegeben werden. In diesem Sinne bedeutet ein Tastverhältnis von 50% zu 50%, dass die ersten und zweiten Maßsegmente zu gleichen Anteilen auf der Maßverkörperung angeordnet sind. Bei davon abweichenden Tastverhältnissen, beispielsweise 70% zu 30% oder 30% zu 70%, überwiegt entsprechend der Anteil der ersten oder der zweiten Maßsegmente.

Die Maßverkörperung weist in der Regel eine Vielzahl erster Maßelemente auf, welche mittels der Sensoranordnung zur Auswertung deren Position erfasst werden können. Die Abfolge der ersten Maßelemente kann als Spur bezeichnet werden. Die ersten Maßelemente, umfassend erste und zweite Maßsegmente, können beispielsweise eine Analogspur bilden.

Aus der DE 41 23 722 A1 ist beispielsweise ein Kodierer mit einer Maßverkörperung bekannt, welche mehrere Spuren mit unterschiedlichen Periodenlängen aufweist. In der DE 10 2018 122 931 A1 sind die Periodenlängen der entsprechenden Spuren binär gewichtet.

Weiterhin ist aus dem Dokument US 2023/366702 A1 eine Maßverkörperung für einen Positions-Kodierer mit zwei quasi-komplementären Spuren mit örtlich unterschiedlichem Tastverhältnis bekannt.

In der Praxis hat es sich als vorteilhaft erwiesen, wenn die Maßverkörperung mindestens ein zwischen die ersten Maßelemente eingebettetes zweites Maßelement aufweist. Mit diesem zweiten Maßelement lassen sich ergänzend zu der Analogspur zusätzliche Informationen auf der Maßverkörperung hinterlegen. Eine häufige Anwendung eines eingebetteten zweiten Maßelements ist die Markierung einer Indexposition in einer Analogspur. Über eine solche Indexposition als Referenz lässt sich beispielsweise bei relativen bzw. inkrementellen Dreh-Encodern eine absolute Winkelposition markieren.

Im Stand der Technik ist es beispielsweise aus der DE 10 2012 202 138 B4 bekannt, bei einem optischen Encoder-System ein zweites Maßelement in Form eines Indexelements in eine Vielzahl von ersten Maßelementen einzubetten. Die ersten Maßelemente bilden dabei eine einzelne optische Spur, welche über eine Sensoranordnung single-ended abgetastet wird. Das zweite Maßelement weist eine von den ersten Maßelementen abweichende Form auf und wird über eine spezielle Index-Fotodiode ausgewertet.

Auch wenn sich ein solches Encoder-System grundsätzlich bewährt hat, geht mit der Einbettung des Indexelements in die ersten Maßelemente eine unerwünschte Störung in Form einer Verzerrung der single-ended Abtastsignale der ersten Maßelemente einher. Hieraus resultiert ein Qualitätsverlust der Abtastsignale. Unter ungünstigen Messbedingungen kann im Ergebnis die Messgenauigkeit des Encoders beeinträchtigt werden.

Vor diesem Hintergrund stellt sich die Erfindung die **Aufgabe**, einen Encoder anzugeben, welcher die zuverlässige detektierbare Einbettung eines zweiten Maßelements in eine Vielzahl erster Maßelemente ermöglicht, ohne dass es zu einer Beeinträchtigung der Abtastung der ersten Maßelemente kommt.

Diese Aufgabe wird bei einem Encoder der eingangs genannten Art durch die Merkmale des Patentanspruchs 1 **gelöst**. Vorteilhafte Weiterbildungen sind in den abhängigen Unteransprüchen angegeben.

Der Encoder ist derart ausgebildet, dass die Maßelemente quer, insbesondere senkrecht, zur Tastrichtung differenziell abgetastet werden und dass die Maßelemente quer zur Tastrichtung in mehrere Tastbereiche unterteilt sind, welche unterschiedliche Bereichstastverhältnisse aufweisen, wobei die Bereichstastverhältnisse an dem zweiten Maßelement im Vergleich zu den ersten Maßelementen verändert sind. Über die Unterteilung der Maßelemente in unterschiedliche Bereichstastverhältnisse aufweisende Tastbereiche und das Vorsehen veränderter Bereichstastverhältnisse an dem zweiten Maßelement lässt sich in Kombination mit der differenziellen Abtastung quer zur Tastrichtung eine Störung der Abtastung der ersten Maßelemente effektiv vermeiden. Hierbei wird ausgenutzt, dass ein differenzielles Signal der ersten Maßelemente im Gegensatz zu single-ended Signalen keine Verzerrung aufweist. Vorteilhafterweise lässt sich somit ein oder auch mehrere zweite Maßelemente in erste Maßelemente integrieren, ohne die Qualität der Abtastsignale der ersten Maßelemente zu beeinträchtigen.

In einer vorteilhaften Weiterbildung der Erfindung wird vorgeschlagen, dass in dem ersten Tastbereich das Bereichstastverhältnis an dem zweiten Maßelement im Vergleich zu den ersten Maßelementen verändert, insbesondere vergrößert, ist und dass in dem zweiten Tastbereich das Bereichstastverhältnis an dem zweiten Maßelement im Vergleich zu den ersten Maßelementen verändert, insbesondere verkleinert, ist, wobei die Veränderung symmetrisch oder asymmetrisch ist. Hierdurch lässt sich eine störungsfreie Einbettung des zweiten Maßelements in die ersten Maßelemente auf besonders effektive und einfache Art und Weise sicherstellen. Bei einer symmetrischen Veränderung ergibt sich eine besonders einfache und zuverlässige Einbettung des zweiten Maßelements. Die Bereichstastverhältnisse an dem zweiten Maßelement können insbesondere gegenüber den Bereichstastverhältnissen der ersten Maßelemente invertiert sein. So kann das Bereichstastverhältnis in dem ersten Tastbereich des zweiten Maßelements gegenüber den ersten Maßelementen um einen gewisse Prozentsatz erhöht und das Bereichstastverhältnis in dem zweiten Tastbereich des zweiten Maßelements gegenüber den ersten Maßelementen um den identischen Prozentsatz reduziert sein. Bei einer asymmetrischen Veränderung kann die Erhöhung und/oder Reduzierung in unterschiedlichem Ausmaß, d. h. zu unterschiedlichen Prozentsätzen, erfolgen, wenn dies im jeweiligen Anwendungsfall vorteilhaft ist.

Ferner wird im Hinblick auf eine effektive Abtastung vorgeschlagen, dass das Bereichstastverhältnis an den ersten Maßelementen in dem ersten Tastbereich um einen konstanten Faktor größer und das Bereichstastverhältnis an den ersten Maßelementen in dem zweiten Tastbereich um den konstanten Faktor kleiner ist als ein über die einzelnen ersten Maßelemente gemitteltes Tastverhältnis. Es ergibt sich ein vorteilhaft symmetrischer Aufbau der Maßverkörperung. Wenn das gemittelte Tastverhältnis über den die ersten Maßelemente abtastenden Sensoren der Sensoranordnung gleich bleibt, ändern auch die single-ended Signale nicht ihre Verzerrung. Hierdurch lässt sich auf einfache und zuverlässige Art und Weise ein Offset-Abgleich ermöglichen.

Des Weiteren kann es sich im Hinblick auf eine effektive Abtastung als vorteilhaft erweisen, wenn sich die Bereichstastverhältnisse entlang der Tastrichtung kontinuierlich verändern. Es ergeben sich messtechnisch vorteilhafte graduelle Übergänge entlang der Tastrichtung. Bevorzugterweise können damit bei Dreh-Encodern ein Sinus und ein Cosinus pro Umdrehung der Maßverkörperung codiert werden.

Im Hinblick auf die konstruktive Ausgestaltung der Maßverkörperung hat es sich als vorteilhaft erwiesen, wenn die ersten Maßsegmente und/oder die zweiten Maßsegmente flächenartig ausgebildet sind. Eine solche Ausführung ermöglicht nicht nur eine vergleichsweise einfache Anpassung oder Änderung der Tastverhältnisse und/oder der Bereichstastverhältnisse, sondern kann sich zudem auch als fertigungstechnisch vorteilhaft herausstellen. Die Form der flächenartigen ersten und/oder zweiten Maßsegmente kann insbesondere auf die jeweilige Messaufgabe und/oder die Ausgestaltung der Sensoranordnung angepasst sein.

In diesem Zusammenhang kann es bevorzugt sein, wenn die ersten Maßsegmente und/oder die zweiten Maßsegmente geometrische Formen aufweisen, insbesondere Rechtecke, Trapeze oder Freiformen. Die geometrischen Formen können insbesondere an die Ausgestaltung der Maßverkörperung angepasst sein. So haben sich für Encoder zur Erfassung von Linearbewegungen Maßverkörperungen mit rechteckig geformten ersten und zweiten Maßsegmente als vorteilhaft erwiesen. Bei Encodern zur Erfassung von Drehbewegungen können Maßverkörperungen mit entsprechend flächentransformierten Formen bevorzugt sein, insbesondere Trapez-, Speichen- oder Freiformen.

Es hat sich überdies als vorteilhaft herausgestellt, wenn das Verhältnis der Größe der ersten Maßsegmente zu der Größe der zweiten Maßsegmente dem Tastverhältnis entspricht. Das Tastverhältnis lässt sich bei einer solchen Ausgestaltung auf einfache Weise über die Veränderung der Größe der ersten und/oder zweiten Maßsegmente verändern und gezielt einstellen. Ferner kann das Tastverhältnis bei einer solchen Ausgestaltung auf besonders einfache Art und Weise über die Größenverhältnisse ermittelt werden.

Es wird vorgeschlagen, dass die Sensoranordnung mehrere erste Sensoren zur differenziellen Abtastung der Maßelemente in Tastrichtung und mehrere zweite Sensoren zur differenziellen Abtastung der Maßelemente quer zur Tastrichtung aufweist. Eine solche Ausgestaltung der Sensoranordnung erlaubt eine zuverlässige Abtastung der Maßelemente. Die ersten und zweiten Sensoren können integrierte Schaltungen umfassen und vorzugsweise als Halbleiter-Chip ausgebildet sein.

In diesem Zusammenhang ist es bevorzugt, wenn die ersten Sensoren zur differenziellen Abtastung der ersten Maßelementen entlang der Tastrichtung angeordnet sind. Insbesondere können diese in einem festen Abstand, welcher einem gewünschten Phasenversatz entspricht, entlang der Tastrichtung angeordnet sein. Der Phasenversatz kann bevorzugt 90 Grad oder 270 Grad betragen.

Eine vorteilhafte Weiterbildung der Erfindung sieht in diesem Zusammenhang vor, dass die zweiten Sensoren zur differenziellen Abtastung des zweiten Maßelements paarweise quer zur Tastrichtung angeordnet sind. Hierdurch lässt sich eine zuverlässige Abtastung des zweiten Maßelements sicherstellen.

Bevorzugterweise sind die ersten Sensoren zur differenziellen Abtastung der ersten Maßelemente zur Ausgabe von Sinussignalen ausgebildet. Insbesondere können die ersten Sensoren eine hierfür günstige Gestalt aufweisen. Die Ausgestaltung der ersten Sensoren im Hinblick auf die Ausgabe von Sinus- oder Cosinussignalen kann insbesondere an das physikalische Messprinzip angepasst sein.

Eine vorteilhafte Anordnung der ersten Sensoren sieht vor, dass diese zur differenziellen Abtastung der ersten Maßelemente tastbereichsübergreifend angeordnet sind. Die ersten Sensoren können sich über sämtliche Tastbereiche oder über nur einen Teil der Tastbereiche erstrecken. Insbesondere können sich die ersten Sensoren quer zur Tastrichtung tastbereichsübergreifend erstrecken. Bevorzugt kann es in diesem Zusammenhang sein, wenn die ersten Sensoren in jedem Tastbereich identisch ausgebildet sind.

In einer vorteilhaften Weiterbildung der Erfindung wird vorgeschlagen, dass die zweiten Sensoren zur differenziellen Abtastung des zweiten Maßelements tastbereichsspezifisch angeordnet sind. Eine solche Anordnung erlaubt eine zuverlässige differenzielle Abtastung. Bevorzugt ist in jedem Tastbereich ein separater zweiter Sensor angeordnet.

Eine weitere vorteilhafte Ausführungsform der Erfindung sieht vor, dass einer der Tastbereiche in zwei Teiltastbereiche aufgeteilt ist, wobei der andere Tastbereich zwischen den beiden Teiltastbereichen angeordnet ist. Eine solche Anordnung der Tastbereiche hat sich als vorteilhaft im Hinblick auf eine zuverlässige Abtastung trotz einer Fehljustage der Maßverkörperung erwiesen. Insbesondere können die Tastbereiche über die Sensoranordnung hinaus vergrößert sein, so dass sich eine fehlerhafte Anordnung oder ein Justagefehler der Maßverkörperung nicht auf die Abtastung auswirkt.

In diesem Zusammenhang hat es sich aus konstruktiver Sicht als vorteilhaft erwiesen, wenn die beiden Teiltastbereiche im Wesentlichen gleich groß sind. Alternativ können die beiden Teiltastbereiche auch unterschiedliche Größen aufweisen, wenn dies im jeweiligen Anwendungsfall vorteilhaft ist.

Im Hinblick auf eine zuverlässige Detektion, insbesondere des zweiten Maßelements, hat es sich als vorteilhaft erwiesen, wenn für jeden Teiltastbereich ein separater zweiter Sensor zur differenziellen Abtastung des zweiten Maßelements vorgesehen ist. Eine solche Ausgestaltung ermöglicht eine zuverlässige differenzielle Abtastung der Teiltastbereiche.

Es ist ferner bevorzugt, wenn die ersten und zweiten Maßelemente quer zur Tastrichtung in mehrere Spursegmente unterteilt sind, welche quer zur Tastrichtung in mehrere Tastbereiche unterteilt sind. Eine solche Unterteilung ermöglicht das Festlegen mehrerer digitaler Bereiche auf der Maßverkörperung. Entsprechend können zusätzliche Informationen auf der Maßverkörperung hinterlegt werden.

Eine vorteilhafte Ausführungsform der Erfindung sieht vor, dass die ersten Maßelemente derart ausgebildet sind, dass diese für eine analoge Spur verwendet werden können. Die entsprechend ausgebildeten Maßelemente können mittels der Sensoranordnung zur Erzeugung einer Analogspur ausgewertet werden.

In diesem Zusammenhang kann es bevorzugt sein, wenn das zweite Maßelement ein Digitalelement ist. Es lassen sich somit Digitalinformationen in eine Analogspur einbetten. Das als Digitalelement ausgebildete zweite Maßelement kann in die ersten Maßelemente eingebettet sein, ohne deren Auswertung zu erschweren.

Ferner hat es sich als vorteilhaft herausgestellt, wenn das zweite Maßelement ein Indexelement zur Markierung einer Indexposition ist. Durch eine solche Ausgestaltung lässt sich eine Referenzierung über das zweite Maßelement ermöglichen. Eine solche Indexposition kann als Referenz für die Positionsermittlung mithilfe des Encoders dienen, insbesondere bei inkrementellen Encodern zur Positionsermittlung von sich rotatorisch bewegenden Bauteilen.

In diesem Zusammenhang wird ferner vorgeschlagen, dass das zweite Maßelement in vier Tastbereiche unterteilt ist und sich kontinuierlich ändernde Bereichstastverhältnisse zur Codierung eines Sinus und eines Cosinus pro Durchlauf der Maßverkörperung aufweist, wobei die vier Tastbereiche über jeweils zwei paarweise angeordnete zweite Sensoren differenziell abtastbar sind. Die vier Tastbereiche können bevorzugt quer zur Tastrichtung nebeneinander angeordnet sein. Die zwei paarweise angeordneten zweiten Sensoren können jeweils zwei Tastbereichen zugeordnet sein. Je zwei der zweiten Sensoren können der differenziellen Erfassung des Sinus und des Cosinus dienen.

Eine weitere vorteilhafte Weiterbildung der Erfindung sieht vor, dass das zweite Maßelement ein Kommutierungselement als Teil einer Kommutierungsspur ist. Eine solche Ausgestaltung kann den Einsatz des Encoders bei der Kommutierung von Elektromotoren, insbesondere Servomotoren, ermöglichen. Insbesondere können mehrere zweite Maßelemente als Kommutierungselemente vorgesehen sein.

Es kann ferner von Vorteil sein, wenn das zweite Maßelement ein Teil eines Binärcodes ist. Eine solche Ausgestaltung ermöglicht in bevorzugter Weise die Darstellung und Integration verschiedenster Informationen, beispielsweise eines Maschinenprogramms.

Eine vorteilhafte Weiterbildung der Erfindung sieht vor, dass die zweiten Maßelemente Teil eines redundanten Kanals für Sicherheits- oder Schutzanwendungen sind. Die zweiten Maßelemente des redundanten Kanals für sicherheitsrelevante Anwendungen lassen sich zuverlässig differenziell quer zur Tastrichtung abtasten, ohne dass es zu einer Störung der Abtastung der ersten Maßelemente kommt.

In einer vorteilhaften Weiterbildung der Erfindung wird vorgeschlagen, dass die ersten und zweiten Sensoren als Fotodioden zur optischen Abtastung der ersten Maßelemente und des zweiten Maßelements ausgebildet sind, wobei sich die ersten Maßsegmente und die zweiten Maßsegmente durch ihre Lichtdurchlässigkeit oder ihr Reflexionsverhalten unterscheiden. Eine solche Ausgestaltung ermöglicht eine fotoelektrische Abtastung der Maßverkörperung. Die Fotodioden oder -detektoren können zur Abtastung in unterschiedlichen Wellenlängenbereichen ausgelegt sein, insbesondere im Blau-, Rot- oder Infrarot-Spektralbereich. Bevorzugt ist eine entsprechende, auf die Sensoren angepasst Lichtquelle vorgesehen, häufig eine oder mehrere LED.

In diesem Zusammenhang wird vorgeschlagen, dass die ersten Maßsegmente im Wesentlichen lichtdurchlässig und die zweiten Maßsegmente im Wesentlichen lichtundurchlässig ausgebildet sind. Eine solche Ausgestaltung eignet sich besonders für die Verwendung in Durchlichtanordnungen, bei welchen die Maßverkörperung zwischen der Lichtquelle und den Sensoren angeordnet ist. Die lichtdurchlässigen ersten Maßsegmente können als insbesondere schlitzartige Ausnehmungen oder Lichtöffnungen in der Maßverkörperung ausgebildet sein. Alternativ können die ersten Maßsegmente reflektierend und die zweiten Maßsegmente im Wesentlichen absorbierend ausgebildet sein. Die ersten Maßsegmente können etwa als Hellflächen und die zweiten Maßsegmente als Dunkelflächen ausgebildet sein. Reflektierende bzw. absorbierende erste und zweite Maßsegmente eignen sich besonders für die Verwendung in Reflexionsanordnungen, bei denen sich die Lichtquelle und die Sensoren auf der gleichen Seite der Maßverkörperung angeordnet sind.

Es hat sich im Zusammenhang mit dem Einsatz von Fotodioden als vorteilhaft erwiesen, wenn mehrere als Fotodioden ausgebildete erste Sensoren zur optischen Abtastung der ersten Maßelemente vorgesehen sind, welche jeweils eine Sensorfläche aufweisen, die derart ausgebildet ist, dass Sinussignale ausgegeben werden können. Insbesondere kann die jeweilige Sensorfläche im Hinblick auf die Ausgabe von Sinus- oder Cosinussignalen geometrieoptimiert sein.

In diesem Zusammenhang ist es bevorzugt, wenn die Sensorfläche der als Fotodioden ausgebildeten ersten Sensoren zur optischen Abtastung der ersten Maßelemente mehrere symmetrisch zueinander angeordnete Teilflächen aufweist. Die Ausgestaltung der ersten Sensoren ist bevorzugt auf die Ausgestaltung der Maßverkörperung, insbesondere im Hinblick auf die Ausgestaltung und Anzahl der Spursegmente sowie der Tastbereiche, abgestimmt.

Eine vorteilhafte Ausgestaltung sieht vor, dass die Anzahl der als Fotodioden ausgebildeten ersten Sensoren zur optischen Abtastung der ersten Maßelemente größer ist als die Anzahl der ersten oder zweiten Maßsegmente. Hierdurch lässt sich eine effektive differenzielle Abtastung sicherstellen.

Weiter bevorzugt ist in diesem Zusammenhang, wenn die als Fotodioden ausgebildeten ersten Sensoren zur optischen Abtastung der ersten Maßelemente in einem gleichmäßigen Abstand zueinander angeordnet sind, welcher kleiner ist als der Abstand zwischen zwei benachbarten ersten Maßsegmenten. Als besonders vorteilhaft hat sich ein Abstand von 90 oder 270 Grad zwischen den ersten Sensoren und ein Abstand von 360 Grad zwischen den ersten Maßelementen erwiesen.

Eine messtechnisch vorteilhafte Ausgestaltung sieht ferner vor, dass die als Fotodioden ausgebildeten zweiten Sensoren zur Erfassung des zweiten Maßelements rechteckige Sensorflächen aufweisen. Auf diese Weise lässt sich eine effektive und zuverlässige Abtastung des zweiten Maßelements sicherstellen. Es sind jedoch auch Fotodioden mit anderweitig geformten Sensorflächen denkbar. Insbesondere ist es bevorzugt, wenn die zweiten Sensoren betreffend ihrer Gestalt an die Ausgestaltung der Maßverkörperung angepasst sind, insbesondere im Hinblick auf die Ausgestaltung und Anzahl der Spursegmente sowie der Tastbereiche.

In einer alternativen vorteilhaften Ausführung handelt es sich bei dem Encoder um einen induktiven Encoder. Ein solcher induktiver Encoder kann sich besonders unter widrigen Umgebungsbedingungen, unter welchen die Zuverlässigkeit Encodern anderer Bauart eingeschränkt sein kann, als vorteilhaft im Hinblick auf eine zuverlässige Positionsmessung erweisen. Bei solchen induktiven Encodern umfasst die Sensoranordnung erste und zweite Sensoren, welche als Sekundärspulen ausgebildet sind. Ferner ist eine Primärspule vorgesehen, welche ein Magnetfeld erzeugt, das in den Sekundärspulen einen Strom induziert. Im Sinne einer Maßverkörperung ist in der Nähe der Sekundärspulen ein elektrisch leitendes, sogenanntes Target vorgesehen, dessen Positionierung relativ zu den Sekundärspulen über eine Spannungsänderung in den Sekundärspulen detektiert werden kann.

Im Zusammenhang mit einem induktiven Encoder hat es sich als besonders vorteilhaft erwiesen, wenn die ersten und zweiten Sensoren hintereinander auf unterschiedlichen Ebenen quer zur Tastrichtung angeordnet sind. Hierdurch lässt sich eine gleichermaßen platzsparende wie effektive Encoderanordnung realisieren.

In einer weiteren alternativen vorteilhaften Ausführungsform handelt es sich bei dem Encoder um einen kapazitiven Encoder. Auch ein kapazitiver Encoder kann sich insbesondere gegenüber widrigen Umwelteinflüssen, etwa betreffend Schmutz, erhöhte Temperaturen und Erschütterungen, als zuverlässiger erweisen als auf einem anderen Messprinzip beruhende Encoder. Das Grundprinzip kapazitiver Encoder beruht auf einer Paarung aus Maßverkörperung und Sensoranordnung, welche einen variablen Kondensator bildet.

In einer weiteren alternativen Ausführungsform handelt es sich bei dem Encoder um einen magnetischen Encoder. Eine solche Ausführung kann ebenfalls eine verbesserte Robustheit, insbesondere im Hinblick auf Verschmutzungen und Vibrationen, mit sich bringen. Als Maßverkörperung kommt bei magnetischen Encodern ein magnetisiertes Element zum Einsatz. Die Sensoranordnung weist bevorzugt magnetoresistive erste und zweite Sensoren auf, welche in der Nähe des magnetisierten Elements positioniert sind. Relativbewegungen zwischen den Sensoren und dem magnetisierten Element lassen sich auf diese Weise detektieren.

Weitere Einzelheiten und Vorteile der erfindungsgemäßen Encoders werden nachfolgend unter Zuhilfenahme der beigefügten Zeichnungen gemäß Fig. 1 bis 8d erläutert.

Darin zeigen:
- Fig. 1: eine schematisierte Ansicht eines optischen Encoders zur Positionserfassung;
- Fig. 2: eine Draufsicht auf eine Maßverkörperung;
- Fig. 3a bis c: schematische Ansichten von Maßverkörperungen mit unterschiedlichen Tastverhältnissen;
- Fig. 4a und b: schematische Darstellungen von unterschiedlichen Abtastsignalen basierend auf einer Abtastung der Maßverkörperungen gemäß Fig. 3a bis c;
- Fig. 5: eine schematische Darstellung eines mehrere Spursegmente aufweisenden Maßverkörperung sowie einer zugehörigen Sensoranordnung;
- Fig. 6a: eine schematische, ausschnittsweise Darstellung einer weiteren Maßverkörperung sowie einer zugehörigen Sensoranordnung;
- Fig. 6b: schematische Darstellungen von unterschiedlichen Abtastsignalen basierend auf einer Abtastung der Maßverkörperung gemäß Fig. 6a;
- Fig. 7: eine weitere schematische, ausschnittsweise Darstellung einer Maßverkörperung nebst zugehöriger Sensoranordnung, und
- Fig. 8a bis d: verschiedene, teilweise ausschnittsweise schematische Darstellungen eines induktiven Encoders zur Positionserfassung.

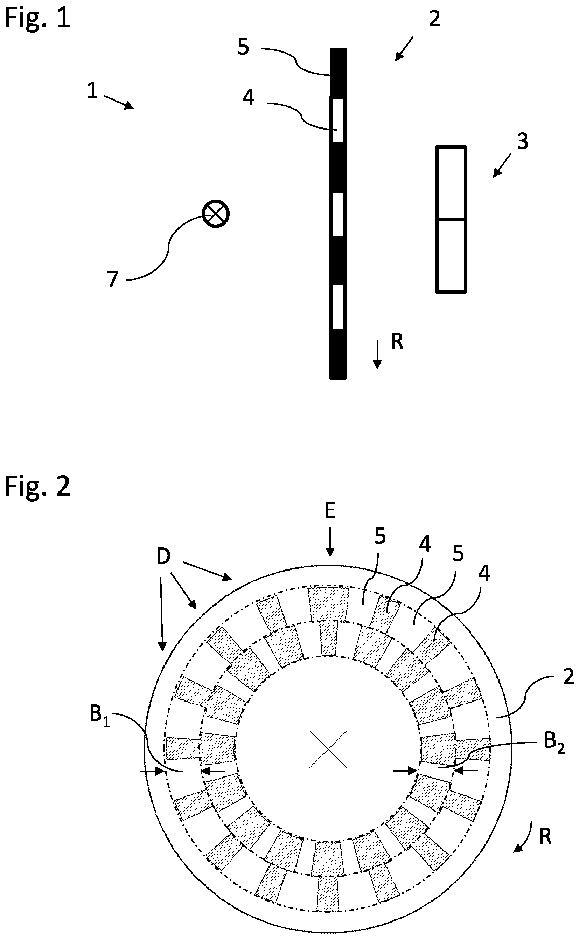

Die Darstellung gemäß Fig. 1 zeigt einen schematischen Aufbau eines optischen Encoders 1 zur Positionserfassung. Die nachfolgenden Erläuterungen beziehen sich der Übersichtlichkeit halber vorrangig auf einen optischen Encoder 1. Sie gelten in analoger Weise jedoch auch für Encoder 1 anderer Bauart, insbesondere für induktive, kapazitive und magnetische Encoder 1.

Der optische Encoder 1 gemäß Fig. 1 umfasst eine Lichtquelle 7, welche etwa als LED-Lichtquelle ausgebildet sein kann. Das von der Lichtquelle 7 ausgesendete Licht beleuchtet eine Maßverkörperung 2. Die Maßverkörperung 2 weist abwechselnd erste Maßsegmente 4 und zweite Maßsegmente 5 auf. Die ersten Maßsegmente 4 sind lichtdurchlässig ausgebildet, so dass das von der Lichtquelle 7 ausgesendete Licht durch diese hindurchtreten kann. Die ersten Maßsegmente 4 können etwa als schlitzartige Ausnehmungen oder Fenster in der Maßverkörperung 2 ausgebildet sein. Die zweiten Maßsegmente 5 sind lichtundurchlässig ausgebildet.

Das von der Lichtquelle 7 ausgesendete und durch die ersten Maßsegmente 4 der Maßverkörperung 2 hindurchtretende Licht kann auf eine hinter der Maßverkörperung 2 angeordnete Sensoranordnung 3 treffen. Die Sensoranordnung 3 kann mehrere Sensoren umfassen, welche jeweils eine integrierte Schaltung umfassen und als Chip ausgebildet sein können. Die Sensoren der Sensoranordnung 3 sind als Fotodioden ausgebildet und können insbesondere sinusförmige Signale liefern.

Die Maßverkörperung 2 kann an einem in den Figuren nicht dargestellten Bauteil so angeordnet sein, dass bei einer Bewegung des Bauteils auch die Maßverkörperung 2 entsprechend mitbewegt wird. Gemäß der Darstellung in Fig. 1 kann das Bauteil und darüber die dargestellte Maßverkörperung 2 etwa in vertikaler Richtung, welche der Tastrichtung R entspricht, translatorisch bewegbar sein. Über die starr angeordnete Sensoranordnung 3 kann die Position der Maßverkörperung 2 und darüber auch die Position des damit verbundenen Bauteils erfasst werden, da es eine Relativbewegung zwischen Maßverkörperung 2 und Sensoranordnung 3 gibt.

Die Komponenten des Encoders 1 gemäß der Darstellung in Fig. 1 sind in einer Durchlichtanordnung angeordnet. Die Lichtquelle 7 und die Sensoranordnung 3 befinden sich auf gegenüberliegenden Seiten der Maßverkörperung 2. Alternativ kann der Encoder 1 jedoch auch in einer (in den Figuren nicht dargestellten) Reflexionsanordnung angeordnet sein, bei welcher sich die Lichtquelle 7 und die Sensoranordnung 3 auf ein und derselben Seite in Bezug auf die Maßverkörperung 7 befinden. In diesem Fall sind die ersten Maßsegmente 4 nicht lichtdurchlässig, sondern reflektierend ausgebildet. Sie können beispielsweise in einem hellen Farbton gehalten sein. Die zweiten Maßsegmente 5 sind absorbierend ausgebildet, etwa dunkel gefärbt. Das Grundprinzip des Encoders 1 ist jedoch dasselbe, unabhängig davon, ob eine Durchlicht- oder eine Reflexionsanordnung vorliegt.

Der Encoder 1 kann nicht nur zur Erfassung von translatorischen, sondern auch zur Erfassung von rotatorischen Bewegungen des Bauteils ausgebildet sein. In einem solchen Fall ist die Maßverkörperung 2 ebenfalls an dem drehbaren Bauteil angeordnet. Jedoch kann die Maßverkörperung 2 hierfür besonders geformt, insbesondere scheibenartig ausgebildet sein. Die Gestalt der ersten und zweiten Maßsegmente 4, 5 kann, insbesondere betreffend deren Form, an die Scheibenform der Maßverkörperung 2 angepasst sein. Die Abtastung erfolgt wiederum in Tastrichtung R, nämlich entlang des Umfangs der Maßverkörperung 2.

Die Darstellung gemäß Fig. 2 verdeutlicht schematisch den Aufbau einer Maßverkörperung 2, welche als Scheibe zur Befestigung an einem drehbaren Bauteil ausgebildet ist. Die zugehörige Lichtquelle 7 und Sensoranordnung 3 sind in der Fig. 2 nicht dargestellt. Die Maßverkörperung 2 weist abwechselnd angeordnete erste Maßsegmente 4 und zweite Maßsegmente 5 auf. Bei den ersten Maßsegmenten 4 kann es sich um transparente, lichtdurchlässige Maßsegmente 4 handeln. Die zweiten Maßsegmente 5 können entsprechend intransparent, lichtundurchlässig ausgebildet sein.

Die ersten und zweiten Maßsegmente 4, 5 erstrecken sich in einem äußeren Bereich der Maßverkörperung 2 speichenartig radial nach außen. Die ersten und zweiten Maßsegmente 4, 5 sind dabei im Wesentlichen T-förmig ausgebildet, wobei die zweiten Maßsegmente 5 im Vergleich zu den ersten Maßsegmenten 4 in radialer Richtung umgekehrt ausgerichtet sind.

Die ersten und zweiten Maßsegmente 4, 5 bilden unterschiedliche Maßelemente D, E, vgl. Fig. 2. Ein Maßelement D, E kann insbesondere einem ersten Maßsegment 4 entsprechen oder aber einer Kombination von jeweils einem oder mehreren Maßsegmenten 4, 5. Auf der Maßverkörperung 2 gemäß Fig. 2 sind zahlreiche identisch ausgebildete erste Maßelemente D vorgesehen. An einer Stelle entlang des Umfangs der Maßverkörperung 2 ist zwischen die ersten Maßelemente D ein zweites Maßelement E eingebettet. Das zweite Maßelement E ist im Vergleich zu den ersten Maßelementen D unterschiedlich ausgebildet. Insbesondere wird es durch ein invers geformtes Maßsegment 4 gebildet, vgl. Fig. 2.

Wie dies in nachfolgenden Absätzen noch detailliert erläutert werden wird, kann mit dem zweiten Maßelement E eine Zusatzinformation in die Maßverkörperung 2 integriert werden. So kann das zweite Maßelement E beispielsweise der Markierung einer Indexposition, gewissermaßen als Referenz, dienen. Insbesondere bei inkrementell arbeitenden Encodern, sog. Inkrementalgebern, kann über einen solchen Index eine absolute Winkelposition kalibriert werden. Das den Index darstellende zweite Maßelement E ist nicht auf einem separaten Bereich, etwa einer getrennten Spur, der Maßverkörperung 2 angeordnet, sondern in die Abfolge der anderen ersten Maßelemente D integriert.

Alternativ kann es sich bei dem zweiten Maßelement E auch um ein Digitalelement oder ein Kommutierungselement als Teil einer Kommutierungsspur für Elektromotoren handeln. Ferner kann es sich bei dem zweiten Maßelement E auch um einen Teil eines Binärcodes handeln.

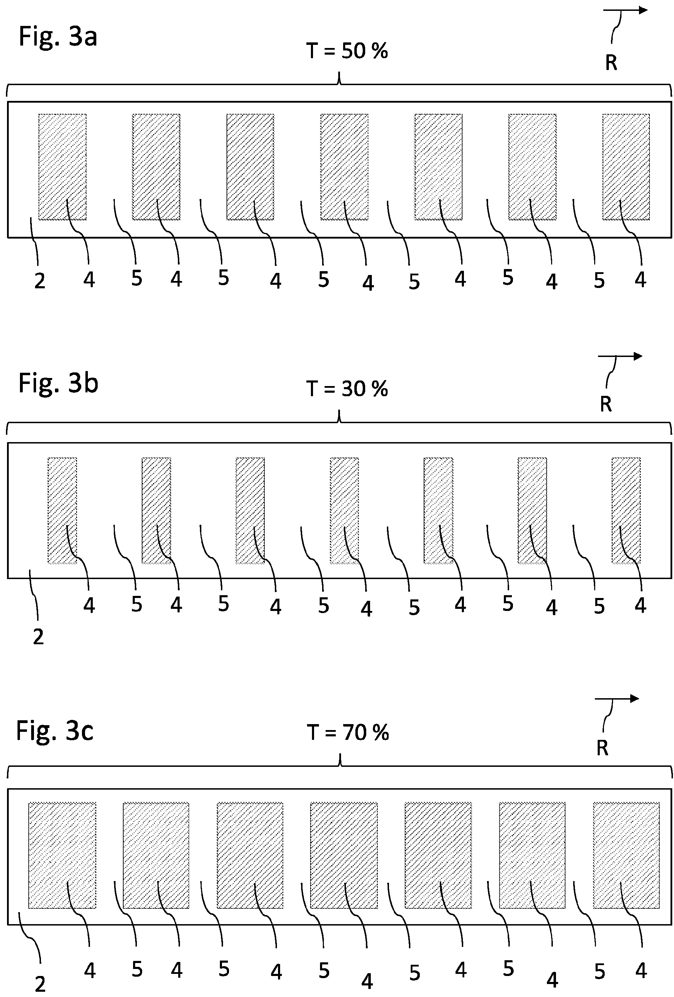

Die Maßverkörperung 2 ist in radialer Richtung in zwei ringförmige Tastbereiche B₁, B₂ unterteilt. Wie dies nachfolgend unter Zuhilfenahme der Darstellungen in Fig. 3a bis c erläutert werden wird, zeichnen sich die Tastbereiche B₁, B₂ durch unterschiedliche Tastverhältnisse T aus.

Im Folgenden wird anhand der Darstellungen gemäß Fig. 3a bis c erläutert, wie das Tastverhältnis T ermittelt wird und welche Auswirkungen unterschiedliche Tastverhältnisse T auf die mittels der Sensoranordnung 3 ausgewerteten Signale haben.

Die Darstellungen gemäß Fig. 3 a bis c zeigen schematische Maßverkörperungen 2. Hierbei kann es sich insbesondere um Maßverkörperungen 2 zur Erfassung translatorischer Bewegungen handeln. Das zugrundeliegende Prinzip ist jedoch ohne Weiteres auch auf scheibenförmige Maßverkörperungen 2 zur Erfassung rotatorischer Bewegungen übertragbar.

Die Maßverkörperungen 2 gemäß Fig. 3 a bis c weisen abwechselnd angeordnete erste und zweite Maßsegmente 4, 5 auf, wobei es sich insbesondere um Flächen unterschiedlicher optischer Transparenz handeln kann. Als Tastverhältnis T wird ein Verhältnis der Größen der ersten und zweiten Maßsegmente 4, 5 definiert. Ein Tastverhältnis T = 50% liegt vor, wenn die ersten Maßsegmente 4 und die zweiten Maßsegmente 5 gleich groß sind. Bezogen auf den relevanten, d. h. den die Maßsegmente 4, 5 aufweisenden Bereich der Maßverkörperung 2, sind somit jeweils 50% erste und zweite Maßsegmente 4, 5 vorhanden. Eine Maßverkörperung 2 mit einem Tastverhältnis T = 50% ist in Fig. 3a dargestellt.

Entsprechend zeigt die Darstellung gemäß Fig. 3b eine Maßverkörperung 2, bei welcher die ersten Maßsegmente 4 kleiner als die zweiten Maßsegmente 5 sind. Der Flächenanteil der ersten Maßsegmente 4 an dem relevanten Bereich der Maßverkörperung 2 beträgt 30%. Der Flächenanteil der zweiten Maßsegmente 5 an dem relevanten Bereich der Maßverkörperung 2 beträgt somit 70%. Das Tastverhältnis T ist somit T=30%. Alternativ kann das Tastverhältnis T auch als "30% zu 70%" bezeichnet werden.

Die Darstellung gemäß Fig. 3c zeigt eine Maßverkörperung 2, bei welcher der Flächenanteil der ersten Maßsegmente 4 größer ist als der Anteil der zweiten Maßsegmente 5. Der Flächenanteil der ersten Maßsegmente 4 beträgt 70%. Entsprechend weist die Maßverkörperung 2 ein Tastverhältnis T = 70% auf.

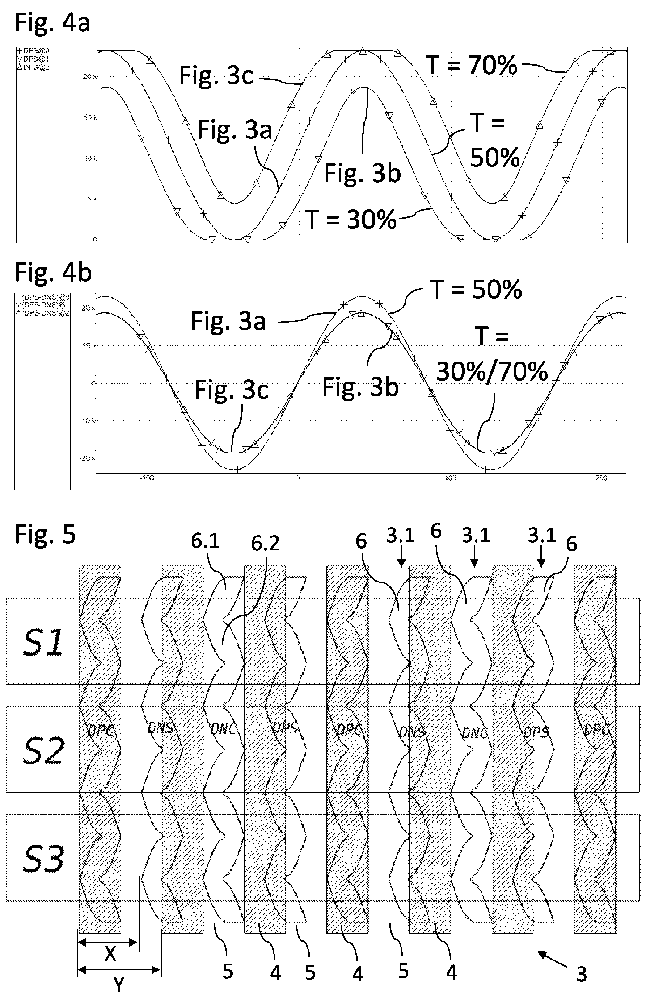

Anhand der Darstellungen in Fig. 4a und b wird nachfolgend erläutert, wie sich unterschiedliche Tastverhältnisse auf die Signale der entsprechenden Sensoranordnung 3 auswirken. Die zugehörige Sensoranordnung 3 ist zwar in den schematischen Darstellungen gemäß Fig. 3a bis c nicht visualisiert. Es handelt sich hierbei jedoch um eine Sensoranordnung 3, wie sie dem Grunde nach in Fig. 5 gezeigt ist.

Fig. 5 zeigt eine Sensoranordnung 3 umfassend mehrere optische erste Sensoren 3.1, welche in einem gleichbleibenden Abstand X hinter einer Maßverkörperung 2 angeordnet sind, welche erste Maßsegmente 4 und zweite Maßsegmente 5 aufweist. Der Abstand X zwischen den optischen ersten Sensoren 3.1 ist dabei geringer als der Abstand Y zwischen zwei ersten Maßsegmenten 4. Der Abstand X zwischen zwei ersten Sensoren 3.1 entspricht einem Abstand von 270 Grad.

Die Darstellung in Fig. 5 zeigt eine Maßverkörperung 2 mit einem Tastverhältnis T = 50%. Ferner kann der Darstellung eine Unterteilung der Maßverkörperung 2 in drei Spursegmente S1, S2, S3 bzw. Teilspuren quer zur Tastrichtung R entnommen werden, welche für die Abtastung mittels der Sensoranordnung 3 jedoch insoweit eine nachrangige Bedeutung hat.

Der Darstellung in Fig. 5 kann weiterhin entnommen werden, dass die ersten Sensoren 3.1 zur Ausgabe von Sinussignalen ausgebildet sind. Die Sensorflächen 6 der ersten Sensoren 3.1 sind als Abfolge von symmetrisch zueinander angeordneten Teilflächen 6.1, 6.2 ausgebildet, vgl. Fig. 5. Die Teilflächen 6.1, 6.2 sind insbesondere V-förmig winklig zueinander angeordnet. Eine solche Ausgestaltung der Sensorflächen 6 erlaubt die Ausgabe von Sinussignalen.

Bei einer Abtastung entlang der Tastrichtung R bewegt sich die Maßverkörperung 2 umfassend die ersten und zweiten Maßsegmente 4, 5 relativ zu den als Fotodioden ausgebildeten ersten Sensoren 3.1. Während der Abtastung werden die ersten Sensoren 3.1 mehr oder weniger stark von der in Fig. 5 nicht abgebildeten Lichtquelle 7 beleuchtet - je nachdem, in welchem Ausmaß erste und zweite Maßsegmente 4, 5 diese abschatten bzw. das ausgesendete Licht durchlassen. In der Darstellung gemäß Fig. 5 sind beispielsweise die ersten Sensoren 3.1 mit der Bezeichnung "DPC" vollständig unterhalb eines lichtdurchlässigen Maßsegments 4 angeordnet. Das entsprechende Sinussignal der Sensoren 3.1 befindet sich zu diesem Zeitpunkt auf einem Maximum. Umgekehrt befinden sich die ersten Sensoren 3.1 mit der Bezeichnung "DNC" vollständig unterhalb von lichtundurchlässigen zweiten Maßsegmenten 5. Der Wert des entsprechenden Sinussignals ist zu diesem Zeitpunkt minimal.

Die ersten Sensoren 3.1 sind im Wesentlichen identisch ausgebildet, unterscheiden sich jedoch in ihrer Bezeichnung, welche sich auch der Darstellung in Fig. 5 entnehmen lässt. Die von den jeweiligen ersten Sensoren 3.1 ausgewerteten Signale sind den diagrammartigen Darstellungen in Fig. 4a und b zu entnehmen.

Nachfolgend wird erklärt, wie sich die Abtastung unterschiedlicher Maßverkörperungen 2 gemäß Fig. 3a bis c aufweisend unterschiedliche Tastverhältnisse T, auf die mit einer Sensoranordnung 3, umfassend mehrere erste Sensoren 3.1, erfassten Signale auswirkt.

Die Darstellung gemäß Fig. 4a verdeutlicht single-ended Signale von ersten Sensoren 3.1 gemäß der Anordnung in Fig. 5, welche Maßverkörperungen 2 gemäß Fig. 3a bis c abtasten. Bei einer Abtastung entlang der Tastrichtung R einer Maßverkörperung 2 aufweisend ein Tastverhältnis T = 50% gemäß Fig. 3a resultiert für den ersten Sensor 3.1 mit der Bezeichnung "DPS" (vgl. Fig. 5) ein Sinussignal, welches definierte Maxima und Minima aufweist. Die Werte der Sinuskurve bewegen sich zwischen einem Minimum, bei welchem der als Fotodiode ausgebildete erste Sensor 3.1 unbeleuchtet ist, und einem Maximum, bei welchem der erste Sensor 3.1 vollständig beleuchtet ist. Die entsprechenden Minima und Maxima werden nur für jeweils einen infinitesimalen Zeitpunkt erreicht.

Wenn eine Maßverkörperung 2 mit einem Tastverhältnis T ungleich 50% mit den ersten Sensoren 3.1 abgetastet wird, ergibt sich eine Verschiebung des Sinuskurvenverlaufs. Bei einem geringeren Tastverhältnis T, beispielsweise T = 30 % gemäß Fig. 3b, wird der erste Sensor 3.1 mit der Bezeichnung "DPS" zu keinem Zeitpunkt vollständig beleuchtet. Entsprechend erreicht die Sinuskurve zu keinem Zeitpunkt ihr Maximum, vgl. Fig. 4a. Auf der anderen Seite ist der erste Sensor 3.1 nicht nur für einen Zeitpunkt, sondern für eine gewisse Zeitspanne unbeleuchtet, was sich in einem Plateau der Sinuskurve beim Wert Null bzw. einer Verschiebung der Sinuskurve nach unten bemerkbar macht. Bei einem erhöhten Tastverhältnis T, beispielsweise T = 70 % gemäß Fig. 3c, wird der erste Sensor 3.1 mit der Bezeichnung "DPS" zu keinem Zeitpunkt vollständig abgeschattet. Entsprechend erreicht die Sinuskurve zu keinem Zeitpunkt ihr Minimum, vgl. Fig. 4a. Auf der anderen Seite ist der erste Sensor 3.1 nicht nur für einen Zeitpunkt, sondern für eine gewisse Zeitspanne vollständig beleuchtet, was sich in einem Plateau der Sinuskurve beim Maximalwert bzw. einer Verschiebung der Kurve nach oben bemerkbar macht. Im Ergebnis weisen die single-ended Sinussignale eine Verzerrung auf, wenn ein Tastverhältnis T ungleich 50% gewählt wird. Hiermit geht ein Datenverlust einher.

Demgegenüber weist eine differenzielle Abtastung den Vorteil auf, dass die entsprechenden Sinussignale zwar einen Kontrastverlust, jedoch keine Verzerrung aufweisen, was nachfolgend anhand der Darstellung in Fig. 4b erläutert wird.

Die Diagramme in Fig. 4b zeigen jeweils ein differenzielles Signal, gebildet aus den Signalen der ersten Sensoren 3.1 mit der Bezeichnung "DPS" und "DNS", vgl. auch die Darstellung gemäß Fig. 5. Es ist zu erkennen, dass das differenzielle Signal einer Abtastung einer Maßverkörperung 2 aufweisend ein Tastverhältnis T = 50 % weder eine Verzerrung noch einen Kontrastverlust hat, vgl. die Kurve entsprechend Fig. 3a.

Bei davon abweichenden Tastverhältnissen, etwa T = 30% gemäß Fig. 3b oder T = 70% gemäß Fig. 3c resultiert ein unverzerrter Kurvenverlauf, welcher jedoch weder Maximum noch Minimum der unverzerrten Kurve erreicht. Die verschobene Kurve weist insoweit einen Kontrastverlust auf, vgl. ebenfalls Fig. 4b.

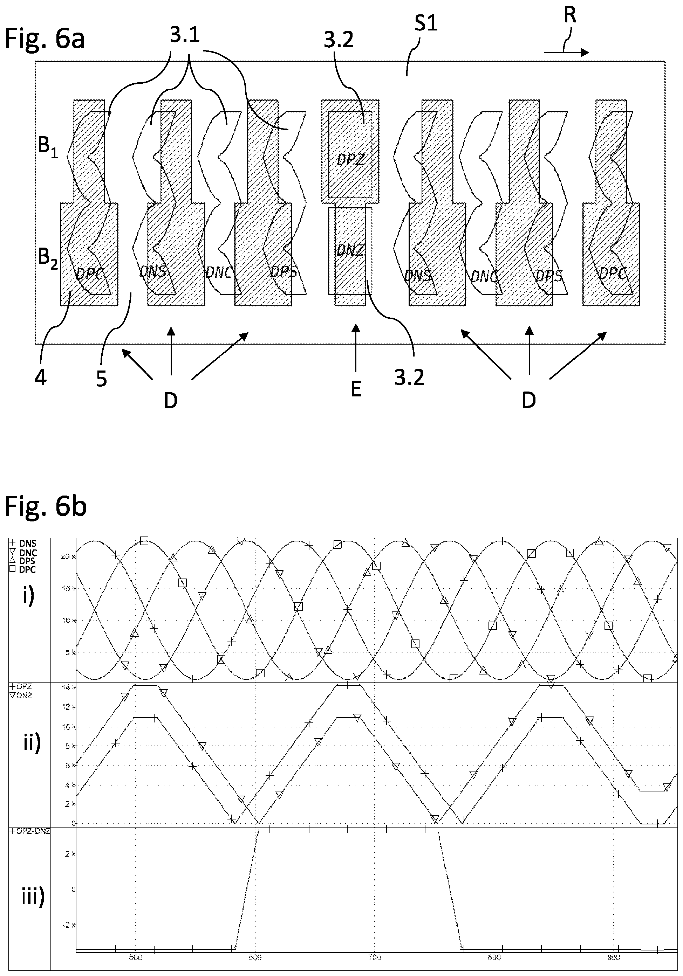

Dieser Effekt wird bei der vorliegenden Erfindung zur Integration der zweiten Maßelemente E in eine Vielzahl von ersten Maßelementen D genutzt. Hierdurch kann eine Verschlechterung der Qualität der Signale der Abtastung der ersten Maßelemente D auf vorteilhafte Weise vermieden werden. Eine beispielhafte Ausgestaltung eines entsprechenden Encoders 1 wird im Folgenden anhand der Darstellung in Fig. 6a und b erläutert.

Die Darstellung in Fig. 6a zeigt einen Ausschnitt aus einer Maßverkörperung 2 aufweisend ein Spursegment S1 mit einer gewissen Periodenlänge und eine zugehörige Sensoranordnung 3 umfassend erste Sensoren 3.1 und zweite Sensoren 3.2.

Die Maßverkörperung 2 weist mehrere erste Maßelemente D auf. Ferner ist ein zwischen die ersten Maßelemente D eingebettetes zweites Maßelement E vorgesehen. Die ersten und zweiten Maßelemente D, E sind quer zur Tastrichtung R in zwei Tastbereiche B₁, B₂ unterteilt, vgl. Fig. 6a. In den Tastbereichen B₁, B₂ liegen unterschiedliche Bereichstastverhältnisse T_{B1}, T_{B2} vor. Das Bereichstastverhältnis T_{B1}, T_{B2} wird in bekannter vorbeschriebener Weise durch das Verhältnis der Anteile der ersten Maßsegmente 4 zu den zweiten Maßsegmenten 5 gebildet.

Gemäß der Darstellung in Fig. 6a ist das Bereichstastverhältnis T_{B1} in dem Bereich B₁ kleiner als das Bereichstastverhältnis T_{B2} in dem Bereich B₂. Dabei ist das Bereichstastverhältnis T_{B1} um einen konstanten Faktor F kleiner als ein über die gesamten ersten Maßelemente D gemitteltes Tastverhältnis T_{M}. Das Bereichstastverhältnis T_{B2} ist um denselben Faktor F größer als das gemittelte Tastverhältnis T_{M}.

An dem zwischen die ersten Maßelemente D eingebetteten zweiten Maßelement E liegen davon abweichende Bereichstastverhältnisse T_{B1}, T_{B2} vor. Gemäß der Darstellung in Fig. 6a liegt im Vergleich zu den Bereichstastverhältnissen T_{B1,} T_{B2} an den ersten Maßelementen D eine inverse Anordnung vor. Das Bereichstastverhältnis T_{B1} an dem zweiten Maßelement E ist vergrößert und das Bereichstastverhältnisse T_{B2} ist verkleinert, jeweils verglichen mit den Verhältnissen an den ersten Maßelementen D.

In einer in den Figuren nicht dargestellten alternativen Ausgestaltung können sich die Bereichstastverhältnisse T_{B1}, T_{B2} zwischen den ersten Maßelmenten D und/oder zwischen den ersten und zweiten Maßelementen D, E nicht schlagartig, sondern kontinuierlich ändern. Die Änderung kann beispielsweise nach der Formel (50% + 30%*sinx)/(50% - 30%*sinx) für einen Sinus pro Umdrehung erfolgen. Auch bei einer solchen Ausgestaltung bleibt das gemittelte Tastverhältnis Tₘ gleich. Es ergeben sich die vorstehend beschriebenen Merkmale und Vorteile.

Nachfolgend wird die Sensoranordnung 3 zur Abtastung der Maßverkörperung 2 beschrieben. Die ersten Sensoren 3.1 sind in bekannter Weise ausgebildet und angeordnet. Es gibt, wie bereits anhand der Darstellung in Fig. 5 erläutert, unterschiedlich bezeichnete Sensoren 3.1, welche zur Erfassung in gleichmäßigem Abstand angeordnet und über die Gestaltung der Sensorflächen 6 zur Ausgabe von Sinussignalen eingerichtet sind. Die ersten Sensoren 3.1 sind tastbereichsübergreifend angeordnet, d. h., sie erstrecken sich über beide Tastbereiche B₁ und B₂. Zwischen die ersten Sensoren 3.1 sind zwei zweite Sensoren 3.2 eingebettet, welche der Erfassung des zweiten Maßelements E dienen.

Die zweiten Sensoren 3.2 sind, anders als die ersten Sensoren 3.1, nicht entlang der Tastrichtung R nebeneinander, sondern quer zur Tastrichtung R übereinander angeordnet, vgl. Fig. 6a. Jeder der beiden zweiten Sensoren 3.1, 3.2 ist zur Abtastung eines Tastbereichs B₁, B₂ ausgebildet. Die Sensorflächen 6 der zweiten Sensoren 3.2 sind rechteckig ausgebildet.

Im Folgenden wird anhand der Diagramme gemäß Fig. 6b die Signalausgabe der ersten und zweiten Sensoren 3.1, 3.2 beschrieben. Das Diagramm gemäß Fig. 6bi) zeigt dabei single-ended Signale verschiedener erster Sensoren 3.1, bezeichnet als "DNS", "DNC", "DPS" und "DPC", gemäß Fig. 6a. Die vier ersten Sensoren 3.1 mit den Bezeichnungen "DNS", "DNC", "DPS" und "DPC" sind in Tastrichtung R um jeweils ein Viertel der Periodenlänge der Spur versetzt angeordnet. Es ist erkennbar, dass über den gesamten Abtastbereich keine Veränderung einer ggf. vorhandenen Verzerrung der Signale vorliegt. Das eingebettete zweite Maßelement E stört die Abtastung der ersten Maßelemente D somit nicht. Hierdurch lässt sich auch ein Offset-Abgleich bei der Einstellung des Encoders 1 auf akkurate Art und Weise bewerkstelligen.

Das Diagramm gemäß Fig. 6bii) zeigt die single-ended Signale der zweiten Sensoren 3.2, welche in Fig. 6a mit "DPZ" und "DNZ" bezeichnet werden. Es ist erkennbar, dass die beiden Sensoren 3.2 während der Abtastung in Abtastrichtung R nicht gleichzeitig voll beleuchtet werden. Dies ist auch bereits anhand der Darstellung in Fig. 6a erkennbar. Die Bereichstastverhältnisse T_{B1}, T_{B2} sind so gewählt, dass entweder der Sensor "DPZ" (wie in Fig. 6a dargestellt) oder der Sensor "DNZ" voll beleuchtet wird, während der jeweils andere zumindest gewisse unbeleuchtete Bereiche hat, was sich in einer Verringerung der Maximalamplitude bemerkbar macht, vgl. Fig. 6bii). Da nur an einer Stelle der Maßverkörperung 2, nämlich an der Stelle des eingebetteten zweiten Maßelements E, der zweite Sensor 3.2 "DPZ" voll beleuchtet wird und ansonsten der andere zweite Sensor 3.2 "DNZ" voll beleuchtet wird, kreuzen sich die Signalverläufe, wenn das eingebettete zweite Maßelement E von den zweiten Sensoren 3.2 differenziell abgetastet wird.

Das Diagramm gemäß Fig. 6biii) zeigt eine differenzielle Auswertung der Signale der zweiten Sensoren 3.2. Das Signal des zweiten Sensors 3.2 "DNZ" wird hierfür von dem Signal des anderen zweiten Sensors 3.2 "DPZ" abgezogen. Die vorbeschriebene Kreuzung der Kurvenverläufe gemäß Fig. 6bii) lässt sich in der Darstellung der differenziellen Abtastung anhand eines Ausschlags leicht erkennen. Die differenzielle Abtastung des zweiten Maßelements E quer zur Tastrichtung R erlaubt eine zuverlässige Detektion des zweiten Maßelements E.

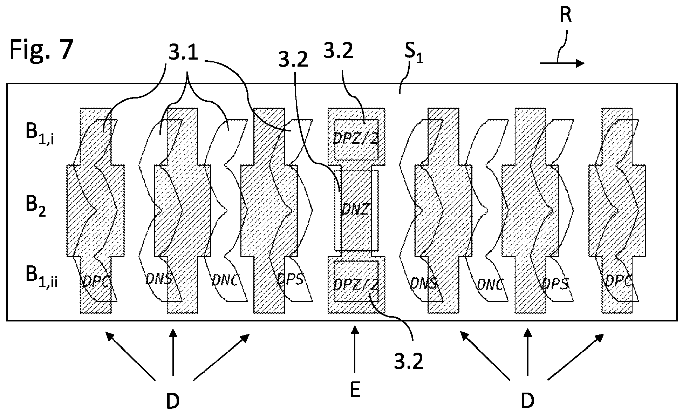

Nachfolgend wird anhand der Darstellung in Fig. 7 eine weitere Maßverkörperung 2 einschließlich zugehöriger Sensoranordnung 3 erläutert, welche sich als besonders robust gegenüber etwaigen Fehljustagen der Maßverkörperung 2 relativ zur Sensoranordnung 3 erweist.

Die Darstellung gemäß Fig. 7 lässt im Vergleich mit Fig. 6a erkennen, dass der Tastbereich B1 in zwei gleich große Teiltastbereiche B_{1,i} und B_{1,ii} aufgeteilt ist, welche oberhalb und unterhalb des Tastbereichs B2 angeordnet sind. Der zugehörige zweite Sensor 3.2 ist entsprechend ebenfalls in zwei Teile aufgeteilt, so dass zwei zweite Sensoren 3.2 "DPZ/2" vorliegen. Der andere zweite Sensor 3.2 "DNZ" und die ersten Sensoren 3.1 unterscheiden sich nicht von dem Ausführungsbeispiel gemäß Fig. 6a.

Die Anordnung gemäß Fig. 7 hat den Vorteil, dass eine gewisse Fehljustage oder eine gewisse fehlerhafte Positionierung der Maßverkörperung 2 gegenüber der Sensoranordnung 3 nicht zu veränderten Verhältnissen der beleuchteten bzw. unbeleuchteten Sensorflächen 6 führt. Es ist ein gewisser Fehljustagen kompensierender Toleranzbereich vorgesehen, welcher dem Abstand quer zur Tastrichtung R zwischen den beiden zweiten Sensoren 3.2 "DPZ/2" und "DNZ" entspricht.

Auch wenn die Darstellungen gemäß Fig. 1 bis 7 jeweils ein einziges eingebettetes zweites Maßelement E zeigen, können jedoch in analoger Weise auch mehrere zweite Maßelemente E zwischen die ersten Maßelemente D eingebettet sein. Es ergeben sich die vorstehend erläuterten Vorteile.

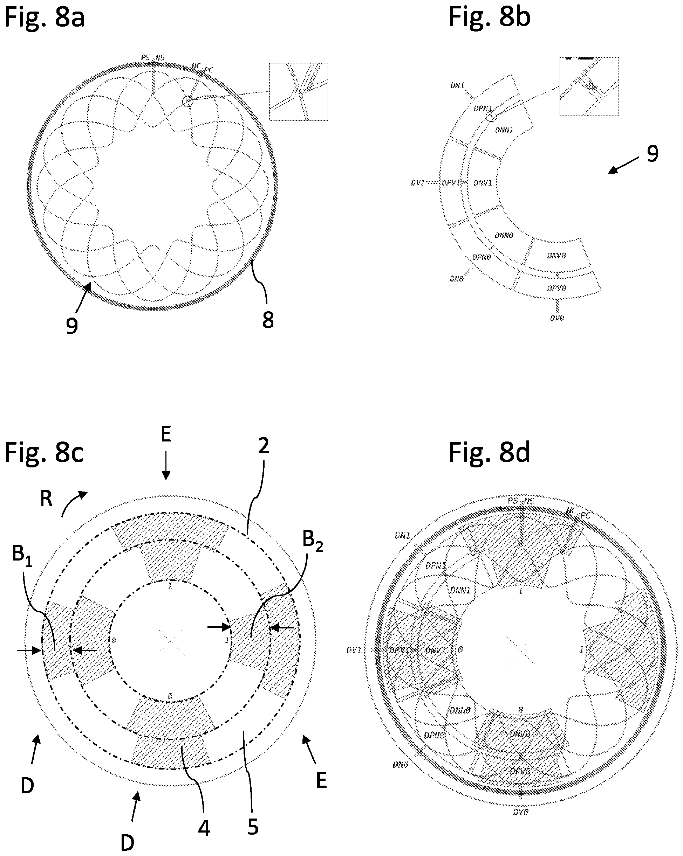

Die Darstellungen gemäß der Figuren 8a bis d zeigen einen Encoder 1 zur Positionserfassung, welcher nicht als optischer, sondern als induktiver Encoder 1 ausgebildet ist. Es handelt sich hierbei um einen induktiven Encoder 1 zur Erfassung von Drehbewegungen, jedoch kann der Encoder 1 auch zur Erfassung von translatorischen Bewegungen ausgebildet sein. Bei einem solchen induktiven Encoder 1 können ein oder mehrere zweite Maßelemente E auf analoge Weise in eine Anzahl von ersten Maßelementen D eingebettet sein, wie bei einem optischen Encoder 1. Auch hierbei wird die Abtastung der ersten Maßelemente D durch die eingebettete Maßelemente E nicht gestört.

Bei dem induktiven Encoder 1 ist eine kreisringförmige Sendespule 8 vorgesehen, welche einen kreisförmigen Modulationsbereich aufweist und betreffend ihrer Funktion der Lichtquelle 7 eines optischen Encoders 1 entspricht, vgl. Fig. 8a. Als Sensoranordnung 3 fungiert eine Sekundärspulenanordnung 9, welche im Modulationsbereich der Sendespule 8 angeordnet ist. Die Sekundärspulenanordnung 9 umfasst mehrere Sekundärspulen, die als erste und zweite Sensoren 3.1, 3.2 dienen und welche derart ausgebildet sind, dass Sinus- oder Cosinussignale ausgegeben werden können. Als Maßverkörperung 2 dient eine elektrisch leitende Codescheibe, welche im Ausführungsbeispiel (vgl. Fig. 8c) insgesamt vierteilig aufgebaut ist und auch als Target bezeichnet werden kann.

Wenn in der Primärspule 8 ein Strom fließt, wird in den Sekundärspulen eine Spannung induziert. Aufgrund der über den Sekundärspulen angeordneten mehrteiligen, unterschiedlich leitfähig ausgeführten Codescheibe wird die Spannungsinduktion in den Sekundärspulen beeinflusst. Über die Ausgestaltung der Sekundärspulen lässt sich die Position der Codescheibe relativ zu den Sekundärspulen bestimmen, so dass auch eine Positionsbestimmung des mit der Codescheibe verbundenen Bauteils möglich ist. Die mehreren Sekundärspulen können unterschiedliche Durchflussrichtungen aufweisen, insbesondere unterschiedlich gepolt sein, vgl. die Darstellung gemäß Fig. 8b. Ferner können zugehörige Empfängerleitungssätze ausgebildet sein, welche Empfängerstromkreise bilden.

Die Sekundärspulenanordnung 9 ist schematisch in Fig. 8b dargestellt. Es sind unterschiedliche Windungen vorgesehen, welche eine direkte Differenzbildung ermöglichen. Die mit "P" und "N" bezeichneten Windungen weisen unterschiedliche Polungen auf. Die Leiterbahnen der einzelnen Sekundärspulen der Sekundärspulenanordnung 9 sind kreuzungsfrei angeordnet, vgl. Fig. 8a und b. Vorteilhafterweise können die Sekundärspulen auf unterschiedlichen Ebenen quer zur Tastrichtung R angeordnet sein.

Die Darstellung in Fig. 8c verdeutlicht den Aufbau der als Codescheibe ausgeführten Maßverkörperung 2. Die Codescheibe weist insgesamt vier jeweils 90 Grad versetzt zueinander angeordnete Segmente auf, welche den ersten Maßsegmenten 4 des optischen Encoders 1 entsprechen. Analog sind dazwischen Segmente angeordnet, welche den zweiten Maßsegmenten 5 des optischen Encoders 1 entsprechen, vgl. die Gegenüberstellung von Fig. 2 und 8c. Auch die Maßsegmente 4, 5 der induktiven Maßverkörperung 2 stehen in einem Tastverhältnis T zueinander. Ferner sind auch die Maßsegmente 4, 5 jeweils in zwei Tastbereiche B1 und B2 unterteilt, welche unterschiedliche Bereichstastverhältnisse T_{B1}, T_{B2} aufweisen, vgl. Fig. 8c. Die ersten und zweiten Maßsegmente 4, 5 unterscheiden sich beim induktiven Encoder 1 durch ihre elektrische Leitfähigkeit.

Es sind - wiederum analog zum optischen Encoder 1 - erste und zweite Maßelemente D, E vorgesehen, vgl. Fig. 8c. Im Ausführungsbeispiel gemäß Fig. 8a bis d sind zwei zweite Maßelemente E zwischen zwei erste Maßelemente D eingebettet. An den eingebetteten Maßelementen E sind die Bereichstastverhältnisse T_{B1}, T_{B2} im Vergleich zu den ersten Maßelementen D verändert. Es ergeben sich die in Bezug auf den Encoder 1 allgemein und in Bezug auf einen optischen Encoder 1 speziell erläuterten Vorteile und Eigenschaften.

Der vorstehend beschriebene Encoder 1 ist derart ausgebildet, dass die Maßelemente D, E quer, insbesondere senkrecht, zur Tastrichtung R differenziell abgetastet werden, und dass die Maßelemente D, E quer zur Tastrichtung R in mehrere Tastbereiche B₁, B₂ unterteilt sind, welche unterschiedliche Bereichstastverhältnisse T_{B1}, T_{B2} aufweisen, wobei die Bereichstastverhältnisse T_{B1}, T_{B2} an dem zweiten Maßelement E im Vergleich zu den ersten Maßelementen D verändert sind. Bei einem solchen Encoder wird die Einbettung eines zweiten Maßelements E in eine Vielzahl erster Maßelemente D ermöglicht, ohne dass es zu einer Beeinträchtigung der Abtastung der ersten Maßelemente D kommt.

### Bezugszeichen:

- 1: Encoder
- 2: Maßverkörperung
- 3: Sensoranordnung
- 3.1: Sensor
- 3.2: Sensor
- 4: Maßsegment
- 5: Maßsegment
- 6: Sensorfläche
- 6.1: Teilfläche
- 6.2: Teilfläche
- 7: Lichtquelle
- 8: Sendespule
- 9: Sekundärspulenanordnung

- B₁: Tastbereich
- B_{1,i}: Teiltastbereich
- B_{1,ii}: Teiltastbereich
- B₂: Tastbereich
- D: Maßelement
- E: Maßelement
- F: Faktor
- R: Tastrichtung
- S1: Spursegment
- S2: Spursegment
- S3: Spursegment
- T: Tastverhältnis
- T_{B1}: Bereichstastverhältnis
- T_{B2}: Bereichstastverhältnis
- T_{M}: gemitteltes Tastverhältnis
- X: Abstand
- Y: Abstand

## Patentansprüche

1. Encoder zur Positionserfassung, mit einer Maßverkörperung (2) und einer die Maßverkörperung (2) differenziell in einer Tastrichtung (R) abtastenden Sensoranordnung (3),
wobei die Maßverkörperung (2) entlang der Tastrichtung (R) abwechselnd erste Maßsegmente (4) und zweite Maßsegmente (5) aufweist, welche in einem Tastverhältnis (T) stehen,
wobei die Maßverkörperung (2) mehrere erste Maßelemente (D) sowie mindestens ein zwischen die ersten Maßelemente (D) eingebettetes zweites Maßelement (E) aufweist,
**dadurch gekennzeichnet,**
**dass** die Sensoranordnung (3) derart ausgebildet ist, dass die Maßelemente (D, E) quer, insbesondere senkrecht, zur Tastrichtung (R) differenziell abgetastet werden, und dass die Maßelemente (D, E) quer zur Tastrichtung (R) in mehrere Tastbereiche (B₁, B₂) unterteilt sind, welche unterschiedliche Bereichstastverhältnisse (T_{B1}, T_{B2}) aufweisen, wobei die Bereichstastverhältnisse (T_{B1}, T_{B2}) an dem zweiten Maßelement (E) im Vergleich zu den ersten Maßelementen (D) verändert sind.

2. Encoder nach Anspruch 1, **dadurch gekennzeichnet, dass** in dem ersten Tastbereich (B₁) das Bereichstastverhältnis (T_{B1}) an dem zweiten Maßelement (E) im Vergleich zu den ersten Maßelementen (D) verändert, insbesondere vergrößert, ist und dass in dem zweiten Tastbereich (B₂) das Bereichstastverhältnis (T_{B2}) an dem zweiten Maßelement (E) im Vergleich zu den ersten Maßelementen (D) verändert, insbesondere verkleinert, ist, wobei die Veränderung symmetrisch oder asymmetrisch ist.

3. Encoder nach einem der Ansprüche 1 oder 2, **dadurch gekennzeichnet, dass** das Bereichstastverhältnis (T_{B1}) an den ersten Maßelementen (D) in dem ersten Tastbereich (B₁) um einen konstanten Faktor (F) größer und das Bereichstastverhältnis (T_{B2}) an den ersten Maßelementen (D) in dem zweiten Tastbereich (B₂) um den konstanten Faktor (F) kleiner ist als ein über die einzelnen ersten Maßelemente (D) gemitteltes Tastverhältnis (T_{M}).

4. Encoder nach einem der Ansprüche 1 bis 3, **dadurch gekennzeichnet, dass** sich die Bereichstastverhältnisse (T_{B1}, T_{B2}) entlang der Tastrichtung (R) kontinuierlich verändern.

5. Encoder nach einem der vorhergehenden Ansprüche, **dadurch gekennzeichnet, dass** die Sensoranordnung (3) mehrere erste Sensoren (3.1) zur differenziellen Abtastung der Maßelemente (D, E) in Tastrichtung (R) und mehrere zweite Sensoren (3.2) zur differenziellen Abtastung der Maßelemente (D, E) quer zur Tastrichtung (R) aufweist.

6. Encoder nach einem der vorhergehenden Ansprüche, **dadurch gekennzeichnet, dass** einer der Tastbereiche (B₁) in zwei Teiltastbereiche (B₁ᵢ, B₁ᵢᵢ) aufgeteilt ist, wobei der andere Tastbereich (B₂) zwischen den beiden Teiltastbereichen (B₁ᵢ, B₁ᵢᵢ) angeordnet ist, wobei für jeden Teiltastbereich (B₁ᵢ, B₁ᵢᵢ) ein separater zweiter Sensor (3.2) zur differenziellen Abtastung der Maßelemente (D, E) quer zur Tastrichtung (R) vorgesehen ist.

7. Encoder nach einem der vorhergehenden Ansprüche, **dadurch gekennzeichnet, dass** die ersten und zweiten Maßelemente (D, E) quer zur Tastrichtung (R) in mehrere Spursegmente (S₁, S₂, S₃) unterteilt sind, welche quer zur Tastrichtung (R) in mehrere Tastbereiche (B₁, B₂) unterteilt sind.

8. Encoder nach einem der Ansprüche 1 bis 7, **dadurch gekennzeichnet, dass** das zweite Maßelement (E) ein Indexelement zur Markierung einer Indexposition ist.

9. Encoder nach einem der Ansprüche 1 bis 7, **dadurch gekennzeichnet, dass** das zweite Maßelement (E) in vier Tastbereiche unterteilt ist und sich kontinuierlich ändernde Bereichstastverhältnisse zur Codierung eines Sinus und eines Cosinus pro Durchlauf der Maßverkörperung (2) aufweist, wobei die vier Tastbereiche über jeweils zwei paarweise angeordnete zweite Sensoren (3.2) differenziell abtastbar sind.

10. Encoder nach einem der Ansprüche 1 bis 7, **dadurch gekennzeichnet, dass** das zweite Maßelement (E) ein Kommutierungselement als Teil einer Kommutierungsspur ist.

11. Encoder nach einem der Ansprüche 1 bis 7, **dadurch gekennzeichnet, dass** das zweite Maßelement (E) ein Teil eines Binärcodes ist.

12. Encoder nach einem der vorhergehenden Ansprüche, **dadurch gekennzeichnet, dass** die ersten und zweiten Sensoren (3.1, 3.2) als Fotodioden zur optischen Abtastung der Maßelemente (D, E) ausgebildet sind, wobei sich die ersten Maßsegmente (4) und die zweiten Maßsegmente (5) durch ihre Lichtdurchlässigkeit oder ihr Reflexionsverhalten unterscheiden.

13. Encoder nach einem der Ansprüche 1 bis 11, **dadurch gekennzeichnet, dass** es sich um einen induktiven Encoder (1) mit induktiven ersten und zweiten Sensoren (3.1, 3.2) handelt.

14. Encoder nach Anspruch 13, **dadurch gekennzeichnet, dass** die induktiven ersten und zweiten Sensoren (3.1, 3.2) untereinander auf unterschiedlichen Ebenen quer zur Tastrichtung (R) angeordnet sind.

15. Encoder nach einem der Ansprüche 1 bis 11, **dadurch gekennzeichnet, dass** es sich um einen kapazitiven oder magnetischen Encoder (1) handelt.

## Claims

1. Encoder for position measurement, comprising a measuring standard (2) and a sensor arrangement (3) differentially sampling the measuring standard (2) in a sample direction (R),
wherein the measuring standard (2) has alternating first measuring segments (4) and second measuring segments (5) along the sample direction (R), which are in a sample ratio (T),
wherein the measuring standard (2) has a plurality of first measuring elements (D) and at least one second measuring element (E) embedded between the first measuring elements (D),
**characterized in that**
the sensor arrangement (3) is configured such that the measuring elements (D, E) are differentially sampled transversely, in particular perpendicularly, to the sample direction (R), and that the measuring elements (D, E) are subdivided transversely to the sample direction (R) into a plurality of sample regions (B₁, B₂), which comprise different sample region ratios (T_{B1}, T_{B2}), wherein the sample region ratios (T_{B1}, T_{B2}) at the second measuring element (E) are changed in comparison to the first measuring elements (D).

2. Encoder according to claim 1, **characterized in that** in the first sample region (B₁) the sample region ratio(T_{B1}) at the second measuring element (E) is changed, in particular increased, in comparison to the first measuring elements (D), and that in the second sample region (B₂) the sample region ratio (T_{B2}) at the second measuring element (E) is changed, in particular reduced, in comparison to the first measuring elements (D), wherein the change is symmetric or asymmetric.

3. Encoder according to one of the claims 1 or 2, **characterized in that** the sample region ratio (T_{B1}) at the first measuring elements (D) in the first sample region (B₁) is greater by a constant factor (F) and the sample region ratio (T_{B2}) at the first measuring elements (D) in the second sample region (B₂) is smaller by the constant factor (F) than a sample ratio (T_{M}) averaged over the individual first measuring elements (D).

4. Encoder according to one of the claims 1 to 3, **characterized in that** the sample region ratios (T_{B1}, T_{B2}) continuously change along the sample direction (R).

5. Encoder according to one of the preceding claims, **characterized in that** the sensor arrangement (3) has a plurality of first sensors (3.1) for differentially sampling the measuring elements (D, E) in the sample direction (R) and a plurality of second sensors (3.2) for differentially sampling the measuring elements (D, E) transversely to the sample direction (R).

6. Encoder according to one of the preceding claims, **characterized in that** one of the sample regions (B₁) is divided into two partial sample regions (B₁ᵢ, B₁ᵢᵢ), wherein the other sample region (B₂) is arranged between the two partial sample regions (B₁ᵢ, B₁ᵢᵢ), wherein a separate second sensor (3.2) for differentially sampling the measuring elements (D, E) transversely to the sample direction (R) is provided for each partial sample region.

7. Encoder according to one of the preceding claims, **characterized in that** the first and second measuring elements (D, E) are subdivided transversely to the sample direction (R) into a plurality of track segments (S₁, S₂, S₃), which are subdivided transversely to the sample direction (R) into a plurality of sample regions (B₁, B₂).

8. Encoder according to one of claims 1 to 7, **characterized in that** the second measuring element (E) is an index element for marking an index position.

9. Encoder according to one of claims 1 to 7, **characterized in that** the second measuring element (E) is subdivided into four sample regions and comprises continuously changing sample region ratios for coding a sine and a cosine per pass of the measuring standard (2), wherein the four sample regions can be differentially sampled via two respective pairs of second sensors (3.2).

10. Encoder according to one of claims 1 to 7, **characterized in that** the second measuring element (E) is a commutation element as part of a commutation track.

11. Encoder according to one of the claims 1 to 7, **characterized in that** the second measuring element (E) is part of a binary code.

12. Encoder according to one of the preceding claims, **characterized in that** the first and second sensors (3.1, 3.2) are configured as photodiodes for optically sampling the measuring elements (D, E), wherein the first measuring segments (4) and the second measuring segments (5) differ in their light transmittance or their reflection behavior.

13. Encoder according to one of the claims 1 to 11, **characterized in that** it is an inductive encoder (1) with inductive first and second sensors (3.1, 3.2).

14. Encoder according to claim 13, **characterized in that** the inductive first and second sensors (3.1, 3.2) are arranged one below the other on different planes transversely to the sample direction (R).

15. Encoder according to one of the claims 1 to 11, **characterized in that** it is a capacitive or magnetic encoder (1).

## Revendications

1. Codeur destiné à la détection de position, comprenant un étalon (2) et un arrangement capteur (3) qui balaye l'étalon (2) de manière différentielle dans une direction de balayage (R),
l'étalon (2) possédant, le long de la direction de balayage (R), en alternance des premiers segments de mesure (4) et des deuxièmes segments de mesure (5), qui se trouvent dans un rapport de balayage (T),
l'étalon (2) possédant une pluralité de premiers éléments de mesure (D) ainsi qu'au moins un deuxième élément de mesure (E) incorporé entre les premiers éléments de mesure (D),
**caractérisé en ce**
**que** l'arrangement capteur (3) est configuré de telle sorte que les éléments de mesure (D, E) sont balayés de manière différentielle transversalement, en particulier perpendiculairement, à la direction de balayage (R), et en ce que les éléments de mesure (D, E) sont subdivisés transversalement à la direction de balayage (R) en plusieurs zones de balayage (B₁, B₂), lesquelles présentent des rapports cycliques de zone (T_{B1}, T_{B2}) différents, les rapports cycliques de zone (T_{B1}, T_{B2}) au niveau du deuxième élément de mesure (E) étant modifiés par rapport aux premiers éléments de mesure (D).

2. Codeur selon la revendication 1, **caractérisé en ce que** dans la première zone de balayage (B₁), le rapport cyclique de zone (T_{B1}) au niveau du deuxième élément de mesure (E) est modifié, en particulier augmenté, par rapport aux premiers éléments de mesure (D), et **en ce que** dans la deuxième zone de balayage (B₂), le rapport cyclique de zone (T_{B2}) au niveau du deuxième élément de mesure (E) est modifié, en particulier réduit, par rapport aux premiers éléments de mesure (D), la modification étant symétrique ou asymétrique.

3. Codeur selon l'une des revendications 1 ou 2, **caractérisé en ce que** le rapport cyclique de zone (T_{B1}) au niveau des premiers éléments de mesure (D) dans la première zone de balayage (B₁) est supérieur d'un facteur constant (F) et le rapport cyclique de zone (T_{B2}) au niveau des premiers éléments de mesure (D) dans la deuxième zone de balayage (B₂) est inférieur du facteur constant (F) à un rapport cyclique moyenné (T_{M}) sur les premiers éléments de mesure (D) individuels.

4. Codeur selon l'une des revendications 1 à 3, **caractérisé en ce que** les rapports cycliques de zone (T_{B1}, T_{B2}) changent de façon continue le long de la direction de balayage (R).

5. Codeur selon l'une des revendications précédentes, **caractérisé en ce que** l'arrangement capteur (3) possède plusieurs premiers capteurs (3.1) destinés au balayage différentiel des éléments de mesure (D, E) dans la direction de balayage (R) et plusieurs deuxièmes capteurs (3.2) destinés au balayage différentiel des éléments de mesure (D, E) transversalement à la direction de balayage (R).

6. Codeur selon l'une des revendications précédentes, **caractérisé en ce que** l'une des zones de balayage (B₁) est divisée en deux zones de balayage partielles (B₁ᵢ, B₁ᵢᵢ), l'autre zone de balayage (B₂) étant disposée entre les deux zones de balayage partielles (B₁ᵢ, B₁ᵢᵢ), un deuxième capteur (3.2) séparé destiné au balayage différentiel des éléments de mesure (D, E) transversalement à la direction de balayage (R) étant prévu pour chaque zone de balayage partielle (B₁ᵢ, B₁ᵢᵢ).

7. Codeur selon l'une des revendications précédentes, **caractérisé en ce que** les premier et deuxième éléments de mesure (D, E) sont subdivisés transversalement à la direction de balayage (R) en plusieurs segments de piste (S₁, S₂, S₃), lesquels sont subdivisés transversalement à la direction de balayage (R) en plusieurs zones de balayage (B₁, B₂).

8. Codeur selon l'une des revendications 1 à 7, **caractérisé en ce que** le deuxième élément de mesure (E) est un élément d'index destiné au marquage d'une position d'index.

9. Codeur selon l'une des revendications 1 à 7, **caractérisé en ce que** le deuxième élément de mesure (E) est subdivisé en quatre zones de balayage et présente des rapports cycliques de zone qui varient continuellement pour le codage d'un sinus et d'un cosinus par passage de l'étalon (2), les quatre zones de balayage pouvant être balayées de manière différentielle respectivement par l'intermédiaire de deux deuxièmes capteurs (3.2) disposés par paires.

10. Codeur selon l'une des revendications 1 à 7, **caractérisé en ce que** le deuxième élément de mesure (E) est un élément de commutation faisant partie d'une piste de commutation.

11. Codeur selon l'une des revendications 1 à 7, **caractérisé en ce que** le deuxième élément de mesure (E) est une partie d'un code binaire.

12. Codeur selon l'une des revendications précédentes, **caractérisé en ce que** les premier et deuxième capteurs (3.1, 3.2) sont réalisés sous la forme de photodiodes pour le balayage optique des éléments de mesure (D, E), les premiers segments de mesure (4) et les deuxièmes segments de mesure (5) se distinguant par leur facteur de transmission de la lumière ou leur comportement de réflexion.

13. Codeur selon l'une des revendications 1 à 11, **caractérisé en ce qu'**il s'agit d'un codeur inductif (1) comprenant des premier et deuxième capteurs (3.1, 3.2) inductifs.

14. Codeur selon la revendication 13, **caractérisé en ce que** les premier et deuxième capteurs (3.1, 3.2) inductifs sont disposés l'une par rapport à l'autre dans des plans différents transversalement à la direction de balayage (R).

15. Codeur selon l'une des revendications 1 à 11, **caractérisé en ce qu'**il s'agit d'un codeur (1) capacitif ou magnétique.
